# EUROPÄISCHE PATENTSCHRIFT

(11) **EP 1 106 859 B1**
(45) Veröffentlichungstag und Bekanntmachung des Hinweises auf die Patenterteilung: **31.05.2006**
(21) Anmeldenummer: 99123979.9
(22) Anmeldetag: 07.12.1999
(51) Int. Cl.: F16D 69/04

(54) **Verfahren zur Herstellung von Trägerplatten für Bremsbeläge**
Method for the manufacturing of brake lining support plates
Procédé de fabrication des plaques de support pour garnitures de frein

(43) Veröffentlichungstag der Anmeldung: 13.06.2001
(60) Teilanmeldung: 05024175.1
(73) Patentinhaber: AlliedSignal Bremsbelag GmbH, 21509 Glinde (DE)
(72) Erfinder: Himmelsbach, Rainer, 21465 Reinbek (DE); Grimme, Hansjörg, 21509 Glinde (DE)
(74) Vertreter: Richter, Werdermann, Gerbaulet & Hofmann

(56) Entgegenhaltungen:
- EP-A- 0 254 827
- EP-A- 0 442 052
- EP-A- 0 581 988
- EP-A- 0 626 228
- EP-A- 0 760 436
- DE-A- 4 138 933
- DE-U- 8 201 404
- GB-A- 772 943
- PATENT ABSTRACTS OF JAPAN vol. 005, no. 158 (M-091), 12. Oktober 1981 (1981-10-12) -& JP 56 086244 A (SUMITOMO ELECTRIC IND LTD), 13. Juli 1981 (1981-07-13)
- PATENT ABSTRACTS OF JAPAN vol. 1999, no. 13, 30. November 1999 (1999-11-30) -& JP 11 210792 A (SUMITOMO ELECTRIC IND LTD;KUSHIRO BRAKE KK), 3. August 1999 (1999-08-03)

## Beschreibung

Die Erfindung betrifft ein Verfahren zum Herstellen von Trägerplatten für Materialblöcke, insbesondere für Reibmaterialblöcke, gemäß dem Oberbegriff des Anspruches 1.

Aus dem DE-GM 82 01 404 ist ein Reibbelag für Scheibenbremsen, insbesondere für Straßenfahrzeuge und Schienenfahrzeuge bekannt. Dieser Reibbelag ist ein- oder mehrteilig ausgebildet und besteht aus einem auf einer Trägerplatte bzw. Trägerblech befestigten Block aus einem gepressten Reibwerkstoff. Die Trägerplatte weist auf der den Reibwerkstoff tragenden Seite ein aufgesintertes Halterungsbett aus einzelnen, mit dem Reibwerkstoff kraft- und formschlüssig bildenden Formkörpern mit Hinterschneidungen, Einziehungen od. dgl. auf. Auf dem Halterungsbett ist der aufgepresste Reibwerkstoff in Blockform unter Ausfüllung der Hinterschneidungen, Einziehungen od. dgl. der einzelnen Formkörper befestigt.

Mit diesem Reibbelag soll eine kraft- und formschlüssige Verbindung zwischen dem Reibwerkstoffblock und dem Trägerblech bei gleichzeitiger Erhöhung der Temperaturbeständigkeit der Haftschicht geschaffen werden. Durch die Ausbildung der Haftschicht aus einer auf dem Trägerblech aufgesinterten Schicht aus Formkörpern soll die hohe Haftung zwischen der auf das Formkörperbett aufgepressten Reibmaterialmischung und dem Trägerblech erreicht werden. Das Aufsintern des Formkörperbettes erfolgt bei gleichmäßiger Erwärmung des Trägerbleches und damit sich das Trägerblech während des Aufsinterprozesses durch die Erhitzung nicht in seiner Struktur und in seinen Eigenschaften verändert, ist es erforderlich, Trägerbleche von größerer Stärke zu verwenden, damit keine Veränderungen der physikalischen Eigenschaften des Trägerplattenmaterials eintreten. Hinzukommt, dass bei diesem Reibbelag keine Trägerbleche aus nichtmetallischen Materialien eingesetzt werden können.

Derartige Reibbeläge, die sich in ihrem praktischen Einsatz seit langem bewährt haben, erfordern oftmals noch die Verwendung einer Zwischenschicht zwischen dem Halterungsbett und dem Reibmaterialblock. Diese Zwischenschicht wurde bisher als Binderfolie oder als Kleber ausgebildet, sie ist jedoch mit verschiedenen Nachteilen verbunden, so dass es wünschenswert ist, eine Möglichkeit zu schaffen, dass auf diese Zwischenschicht verzichtet werden kann. Weiterhin hat es sich gezeigt, dass zwischen den bekannten Halterungsbetten und der Trägerplatte bzw. zwischen dem Halterungsbett und dem Reibwerkstoff Rissbildungen und/oder Korrosion auftreten kann, so dass eine Unterrostung des Reibmaterials kriechend von der Seite auftreten kann, die zu einer Beeinträchtigung der Bremswirkung und - im Extremfall - zu einem Ausfall des Bremsbelages führen könnte.

Das Verkleben des Reibmaterials mit dem Trägerblech erfordert bei der Bremsbelagherstellung durch die Wärmebehandlung des Klebemittels relativ lange Standzeiten, was zu einer geringeren Fertigungszahl führt. Diese Standzeiten sind erforderlich, um eine gute Verklebung des Reibmaterials mit dem Trägerblech zu erreichen. Werden die Standzeiten verkürzt, dann werden schlechte Haftverbindungen erhalten, da kein vollständiger Wärmedurchgang durch das Klebemittel erreicht wird. Hinzu kommt, dass bei der Verwendung von Klebemittel das Trägerblech vorbehandelt sein muss. Die sich durch das Aufbringen von Lackschichten ergebenden Nachteile werden gemäß der EP 0 442 052 A1 dadurch vermieden, dass vor dem Aufpressen des Reibmaterials auf die Trägerplatte auf den Rauhgrund der Trägerplatte ein galvanischer Metallüberzug aufgebracht wird. Das Zusammenwirken von Rauhgrund (Halterungsbett) und galvanischem Überzug führt dabei zu einem hohen Korrosionsschutz für die Trägerplatte, während der Rauhgrund die Haftung zwischen dem Reibmaterial und der Trägerplatte bewirkt, da der galvanische Überzug dem Konturverlauf des Rauhgrundes folgt.

Es hat sich jedoch gezeigt, dass der für die Trägerplatte bisher verwendete handelsübliche Stahl sich in Bezug auf seine Festigkeitseigenschaften nach der Rauhgrund-Behandlung derart verändert, dass sich die Festigkeit des Stahls verringert. Desweiteren hat es sich gezeigt, dass Trägerplatten für Bremsbeläge an bestimmten Stellen, bevorzugterweise in ihren Endbereichen, besonders stark und hoch beansprucht werden. Trägerplatten unter anderem auch mit hammerkopfartigen Enden oder abstützenden Endflächen sind hohen dynamischen und statischen Zug- sowie Druckbelastungen und auch Schwingungen ausgesetzt; Trägerplatten mit Hinterschneidungen in ihren Endbereichen sind stark zugbeansprucht. Diese Zonen in den Endbereichen der Trägerplatte sind sehr hohen mechanischen Spannungen ausgesetzt.

Aus der DE 41 38 933 A1 ist es ferner bekannt, nach dem Aufbringen des Rauhgrundes auf die Trägerplatte und vor dem Aufpressen des Reibwerkstoffes die Trägerplatte im Bereich hochbelasteter Zonen auf Temperaturen zwischen 800° C und 900° C bei einer Behandlungszeit von drei bis fünfzehn Sekunden zu erwärmen und anschließend auf Raumtemperatur abzukühlen.

Die Literaturstelle PATENT ABSTRACTS OF JAPAN Bd. 005, Nr. 158 (M-091), 12. Oktober 1981 (1981-10-12) -& JP 56 086244 A (SUMITOMO ELECTRIC IND LTD), 13. Juli 1981 (1981-07-13) beschreibt eine Reibbelaganordnung für eine Scheibenbremse, nach der auf der Oberfläche eines Metallbleches ein Reibbelag unter Anwendung von Wärme und Druck aufgesintert wird, wobei auf die Oberfläche des Metallbleches vor dem Aufsintern ein Drahtgeflecht durch Punktschweißen oder Löten aufgebracht wird. Um die Reibbelaganordnung zu erhalten, wird auf das so vorbereitete Metallblech der pulverförmige Reibwerkstoff zusammen mit einem Bindemittel unter Verwendung einer Form unter Anwendung von Wärme und Druck so aufgesintert, dass die pulvrige Mischung in den Raum zwischen dem Drahtgeflecht und dem Metallblech eingepresst wird. Bei dieser Reibbelagherstellung wird das Metallblech, die die Trägerplatte bildet, einer Wärmeeinwirkung ausgesetzt und zwar schon durch die Anbringung des Drahtgeflechtes, das die Funktion eines Halterungsbettes dabei hat.

Die Literaturstelle PATENT ABSTRACTS OF JAPAN Bd. 1999, Nr. 13, 30. November 1999 (1999-11-30) -& JP 11 210792 (SUMITOMO ELECTRIC IND LTD; KUSHIRO BRAKE KK), 3. August 1999 (1999-08-03) offenbart einen Scheibenbremsbelag, bei dem ein Reibwerkstoff mit einer metallischen Grundplatte vollständig verbunden ist, wobei die Grundplatte mit Halteelementen versehen ist, die aus der Plattenoberfläche herausstehen und aus einem Kopfteil und einem Schaftteil bestehen, so dass sich T-förmige Verankerungselemente für den Reibwerkstoff ergeben, die aus dem Plattenmaterial ausgeformt sind.

Ein Verfahren zur Veränderung der Oberfläche eines Werkstückes, das mit einem anderen Element verbunden werden soll, beschreibt die EP-A-0 626 228. Dieses Verfahren besteht darin, dass einzelne Stellen der Oberfläche des Werkstückes einem Energiestrahl ausgesetzt werden, wodurch an jeder strahlbeaufschlagten Stelle Material des Werkstückes durch die Einwirkung des Energiestrahles geschmolzen und dabei seitlich versetzt wird, so dass dann nach dem Erhalten des erhitzten Materials eine Vertiefung in dem Werkstück erhalten wird, die von einem Bereich aus verfestigtem Material umgeben ist, der sich wallartig aus der Oberfläche des Werkstückes erhebt und einen halsartig eingezogenen Bereich bildet. Es wird auf diese Weise eine Oberflächenstruktur geschaffen. Dieses Verfahren setzt voraus, dass das Oberflächen zu behandelnde Werkstück eine große Dicke aufweisen muss, um zur Ausbildung der Vertiefungen in der Oberfläche des Werkstückes und der Oberflächenerhebungen genügend Material zur Verfügung zu haben. Mit diesem Verfahren wird in die Struktur des Materials des Werkstückes eingegriffen, was zu einer Veränderung der physikalischen und mechanischen Eigenschaften des Werkstückes führt.

Die EP-A-0 581 988 beschreibt einen Bremsklotz und ein Verfahren zu seiner Herstellung sowie Magnetschienenbremse für Straßen- und Schienenfahrzeuge, insbesondere auch für Schienenfahrzeuge mit hohen und höheren Geschwindigkeiten. Der Bremsklotz besteht aus ein- oder mehrteilig ausgebildeten, auf einem Trägerkörper gepressten Reibwerksttoffblock, wobei mindestens ein Reibwerkstoffblock auf mehreren, nicht in einer Ebene liegenden, aneinander grenzenden Flächenstücken von Teilen des gegossenen Trägerkörpers kraft- und/oder formschlüssig umfasst wird. Der Reibwerkstoffblock ist auf einem Trägerblech befestigt, das auf der den Reibwerkstoffblock tragenden Seite oder auf beiden Seiten je ein aufgesintertes Halterungsbett aus einzelnen mit dem Reibwerkstoffblock kraft- und formschlussbildenden Formkörpern mit Hinterschneidungen, Einziehungen o. dgl. als Rauhgrund aufweist, wobei auf dem Halterungsbett der aufgepresste Reibwerkstoffblock unter Ausfüllung der Hinterschneidungen, Einziehung der einzelnen Formkörper befestigt ist.

Es ist Aufgabe der vorliegenden Erfindung, ein Verfahren zur Herstellung einer Trägerplatte für Bremsbeläge zur Verfügung zu stellen, mit dem die obengenannten Nachteile beseitigen und auf einfache Weise einen sicheren und festen, insbesondere hochtemperaturfesten Materialverbund zwischen Trägerplatte und Materialblock auch ohne zusätzliche Klebeschicht und unter Ausschluß einer schädlichen bzw. unerwünschten Wärmebehandlung des gesamten Reibmaterialblockes und einer Veränderung der physikalischen Eigenschaften des Trägerplattenmaterials gewährleisten.

Diese Aufgabe wird durch ein Verfahren der o.g. Art mit den im Anspruch 1 gekennzeichneten Merkmalen gelöst.

Das erfindungsgemäße Verfahren besteht darin, dass vermittels einer Düse ein Gemisch aus Trägergas und Metallpulver auf die Oberfläche der Trägerplatte zur Ausbildung eines Halterungsbettes mit separaten, voneinander beabstandeten Materialerhöhungen als Oberflächenstruktur aufgebracht wird, wobei die Materialerhöhungen unter Ausschluss einer Wärmebehandlung der gesamten Trägerplatte mittels lokal oder abschnittsweise auf die Trägerplatte einwirkender Energie, insbesondere Strahlungsenergie, nacheinander oder parallel zueinander erzeugt werden, wobei als Werkstoff für die Trägerplatte Metall, Metalllegierungen, Hartkunststoff, Glas oder Keramik verwendet wird.

Dies hat den Vorteil, dass durch eine geringe thermische Belastung der Trägerplatte beim Herstellen des Halterungsbettes mechanische und physikalische Eigenschaften des Werkstoffes der Trägerplatte nicht negativ beeinflusst werden, wobei gleichzeitig eine verbesserter Materialverbund zwischen Trägerplatte und Materialblock erzielt wird, ohne dass hierfür eine zusätzliche Binder- oder Klebeschicht zwischen Trägerplatte und Materialblock erforderlich ist. Bei weiteren Nachbehandlungen, wie dem Anbringen des Materialblockes auf der Trägerplatte, beispielsweise mittels aufpressen, wird die erzeugte Struktur des Halterungsbettes nicht verändert. Die Größe des Halterungsbettes kann lokal begrenzt in geeigneter Weise gewählt werden. Das erfindungsgemäße Verfahren ist überall dort anwendbar, wo auf einem Trägermaterial für eine weitere Komponente, nämlich den Materialblock, eine Halterungsbett ausgebildet wird. Da nunmehr die Einschränkungen für die Trägerplatte aufgrund der bisher hohen thermischen Belastung beim Herstellen des Halterungsbettes entfallen, erweitert sich der Anwendungsbereich der Schaffung eines Bindungssystems, wie beispielsweise bei Sandwich-Bauteilen, mittels Halterungsbett ganz erheblich. Durch die erfindungsgemäße Struktur des Halterungsbettes wird lediglich die Oberfläche der Trägerplatte geringfügig verändert, jedoch ergeben sich keine unerwünschten Veränderungen des Werkstoffes der Trägerplatte insgesamt hinsichtlich seiner physikalischen und mechanischen Eigenschaften.

Vorzugsweise Weitergestaltungen des Verfahrens sind in den weiteren Ansprüchen beschrieben.

Zweckmäßigerweise werden die Materialerhöhungen aus Stahl, Metall, das Karbide und / oder Nitride enthalten kann, Keramik, Glas oder einem Hartkunststoff, z. B. einem Duroplast hergestellt. Die Materialerhöhungen werden bevorzugt rasterartig auf die Trägerplatte aufgebracht. Es ist vorteilhaft, die Trägerplatte vor dem Ausbilden der Materialerhöhungen vorzuwärmen.

Dadurch, dass die Materialerhöhungen mittels Aufsintern von Pulver oder mittels Pulverbeschichtung mit Laserstrahl, Flammstrahl oder Plasmastrahl, aufgebracht werden ergibt sich die Möglichkeit, das Halterungsbettes auch auf im Raum gekrümmten, gebogenem bzw. verformte Oberflächen der Trägerplatte ohne Schwierigkeiten auszubilden. Insbesondere bei der Pulverbeschichtung mit Laserstrahl ergibt sich der Vorteil, dass wenig Wärmeenergie in die Trägerplatte eingebracht wird, so dass auch dünne bzw. dünnwandige Trägerbleche ohne Schaden durch thermische Überbelastung zu nehmen mit dem erfindungsgemäßen Halterungsbett versehen werden können. Beispielsweise werden als Pulver Metallhydride oder Karbide als Additive zu den oben benannten Materialien verwendet.

Zum Vermeiden einer hohen thermischen Belastung der gesamten Trägerplatte kann das Aufsintern des Pulvers bzgl. der Trägerplatte abschnittsweise erfolgen.

Eine zusätzliche feste Halterung des auf die Trägerplatte aufgepressten Materialblockes erzielt man dadurch, dass die Materialerhöhungen auf der Trägerplatte pilzartig ausgebildet werden. Hierbei bilden entsprechende pilzartige Köpfe der Materialerhöhungen Hinterschneidungen, welche durch Umschließung durch den Werkstoff des aufgepressten Materialblockes eine mechanische Halterung bewirken.

Zum Erzielen eines engen und festen Verbundes wird der Materialblock in die Oberflächenstruktur des Halterungsbettes eingepresst.

In vorteilhafter Weise wird vor dem Aufbringen des Materialblockes auf das Halterungsbett eine keramische Zwischenschicht aufgebracht. Diese Zwischenschicht wirkt als Isolierschicht.

Dies hat den Vorteil, dass durch eine geringe thermische Belastung der Trägerplatte beim Herstellen des Halterungsbettes mechanische und physikalische Eigenschaften des Werkstoffes der Trägerplatte nicht negativ beeinflusst werden, wobei gleichzeitig eine verbesserter Materialverbund zwischen Trägerplatte und Materialblock erzielt wird, ohne dass hierfür eine zusätzliche Binder- oder Klebeschicht zwischen Trägerplatte und Materialblock erforderlich ist. Bei weiteren Nachbehandlungen, wie dem Anbringen des Materialblockes auf der Trägerplatte, beispielsweise mittels aufpressen, wird die erzeugte Struktur des Halterungsbettes nicht verändert. Die Größe des Halterungsbettes kann lokal begrenzt in geeigneter Weise gewählt werden. Das erfindungsgemäße Verfahren ist überall dort anwendbar, wo auf einem Trägermaterial für eine weitere Komponente, nämlich den Materialblock, ein Halterungsbett ausgebildet wird. Durch die erfindungsgemäße Struktur des Halterungsbettes wird lediglich die Oberfläche der Trägerplatte geringfügig verändert, jedoch ergeben sich keine unerwünschten Veränderungen des Werkstoffes der Trägerplatte insgesamt hinsichtlich seiner physikalischen und mechanischen Eigenschaften.

Nachstehend wird die Erfindung anhand der beigefügten Zeichnungen näher erläutert. Diese zeigen in
- Fig. 1-3: ein Herstellungsverfahren für eine Trägerplatte für einen Bremsbelag,
- Fig. 4-6: ein weiteres Herstellungsverfahren für eine Trägerplatte für einen Bremsbelag und
- Fig. 7: eine Ausführungsform einer Trägerplatte,

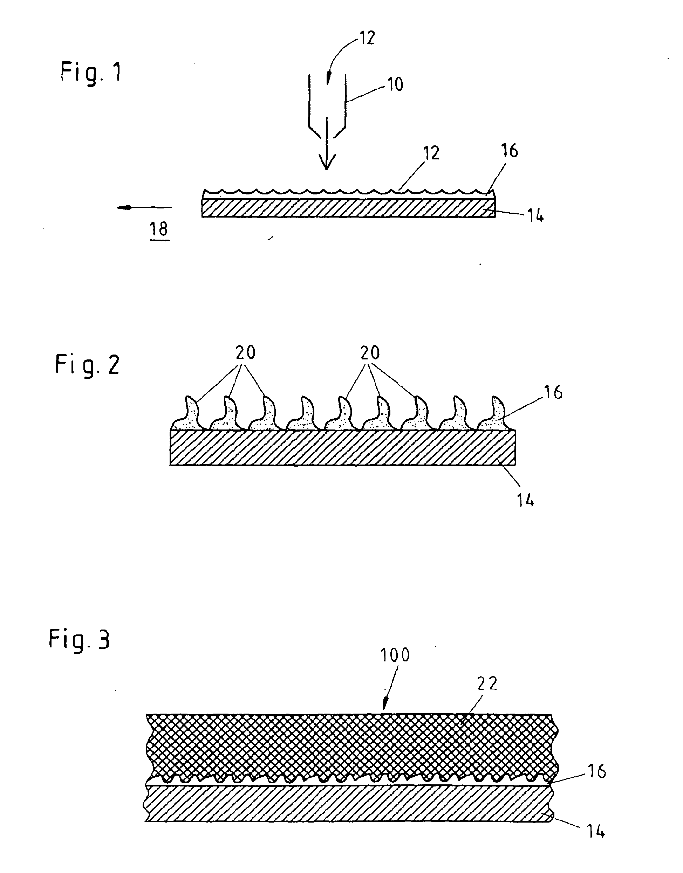

Bei einem Verfahren zum Herstellen einer Trägerplatte wird, wie in Fig. 1 bis 3 veranschaulicht, mittels einer Düse 10 ein Gemisch aus Trägergas und Metallpulver 12 auf die Oberfläche einer Trägerplatte 14 aufgetragen, so dass ein Halterungsbett 16 entsteht (Fig. 1). Die Düse 10 wird beispielsweise computergesteuert über der Trägerplatte 14 verfahren und trägt das Pulver 12 rasterartig als Materialerhöhungen 20 auf die Oberfläche der Trägerplatte 14 auf.

In einem nachfolgenden Sinterofen 18 wird das aufgesprühte Pulver 12 strukturiert (Fig. 2). Hierbei wird nicht die gesamte Trägerplatte 14 sondern werden nur einzelne Abschnitte der Trägerplatte 14 nacheinander einer Temperaturbehandlung unterzogen, so dass sich keine starke thermische Belastung der gesamten Trägerplatte 14 ergibt. Ggf. wird das Auftragen des Pulvers 12 mittels der Düse 10 zusätzlich durch Einwirken eines Laser-, Flamm- oder Plasmastrahls unterstützt.

Anschließend wird ein Reibmaterialblock 22 auf das Halterungsbett 16 der Trägerplatte 14 aufgepresst und es ergibt sich der in Fig. 3 dargestellte Bremsbelag 100.

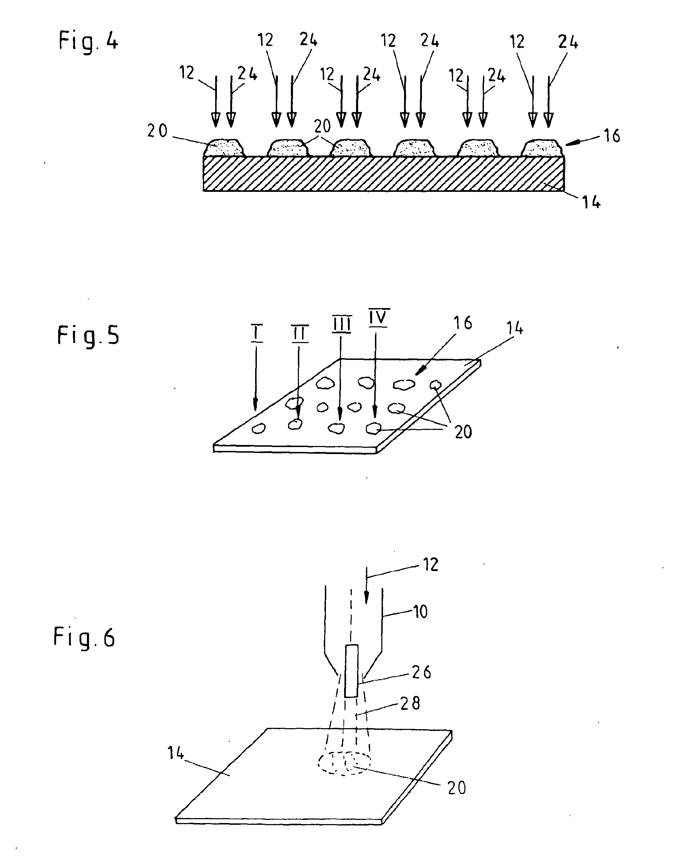

In einem alternativen Herstellungsverfahren, wie in Fig. 4 bis 6 veranschaulicht, wird das Pulver 12 zusammen mit einer lokal am Ort des Pulvers 12 eingebrachten Energie 24 derart aufgetragen, dass fest mit der Oberfläche der Trägerplatte 14 verbundene Materialerhöhungen 20 entstehen (Fig. 4). Die Materialerhöhungen 20 werden einzeln und nacheinander auf der Oberfläche der Trägerplatte 14 ausgebildet (Fig. 5). Mittels der eingebrachten Energie wird eine auf der Trägerplatte 14 aufgebrachte, diskrete Pulveranhäufung zu einer Oberflächenstruktur der Trägerplatte 14 mit Materialerhöhungen 20 bearbeitet.

Das Pulver wird vorzugsweise in einem Gasstrom auf die Trägerplatte 14 aufgebracht, so daß keine partielle Anhäufung gegeben ist. Die Materialerhöhungen 20 werden durch die mit dem Gasstrom mitgeführten Teilchen des Pulvers ausgebildet.

Das Auftragen des Pulvers 12 erfolgt beispielsweise, wie in Fig. 6 dargestellt, mittels der Düse 10 und einem Laser 26, wie beispielsweise einem Neodym-Laser, die in einer Funktionseinheit zur Laserpulverbeschichtung zusammen gefasst sind und beispielsweise computergesteuert über die Trägerplatte 14 verfahren werden. An vorbestimmten Rasterstellen stoppt die Funktionseinheit, bringt Pulver 12 auf und bearbeitet dieses z. B. mittels eines Laserstrahls 28 zu einer Materialerhöhung 20. Der Laser 26 hat den besonderen Vorteil, dass gezielt und nur lokal ein Wärmeeintrag in die Trägerplatte 14 erfolgt. Dies reduziert die thermische Belastung der Trägerplatte 14 ganz erheblich und ermöglicht, dass auch bisher nicht verwendbare, thermisch empfindliche Werkstoffe als Trägerplatte mit Halterungsbett verwendet werden können.

Es hat sich ferner als vorteilhaft herausgestellt, die Trägerplatte 14 vor dem Ausbilden der Oberflächenstruktur 20 vorzuwärmen.

Durch die erfindungsgemäße Strukturausbildung wird die Oberfläche der Trägerplatte 14 vergrößert. Im Bereich der Materialerhöhungen 20, welche als Verbindung zum Reibmaterialblock dienen, wird lediglich nur die Oberfläche der Trägerplatte 14 geringfügig verändert, jedoch ist eine Veränderung des Werkstoffes der Trägerplatte hinsichtlich mechanischer und physikalischer Eigenschaften wirksam vermieden. Statt des Lasers 26 ist auch eine Anwendung einer anderen Energiequelle, wie beispielsweise eines Flammstrahlers, Plasmastrahlers o.ä., möglich. Die Energiequelle muss lediglich die Eigenschaften aufweisen, Wärmeenergie punktuell bzw. in vorbestimmter Weise lokal eng begrenzt aufzubringen, bzw. zu erzeugen.

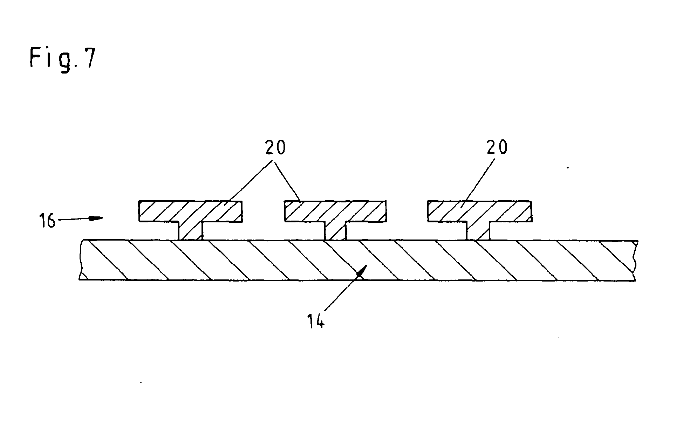

Fig. 7 veranschaulicht eine bevorzugte Ausführungsform einer Trägerplatte 14. Hierbei sind die Materialerhöhungen 20 pilzartig ausgebildet, so dass sich durch entsprechende Hinterschneidungen an den Materialerhöhungen eine mechanisch besonders fester Verbund zwischen Trägerplatte 14 und in Fig. 7 nicht dargestelltem Reibmaterialblock 22 ergibt.

### Bezugszeichenliste

- 100: Bremsbelag
- 10: Düse
- 12: Metallpulver
- 14: Trägerplatte
- 16: Halterungsbett
- 18: Sinterofen
- 20: Materialerhöhungen

- 22: Reibmaterialblock

- 24: Energie
- 26: Laser
- 28: Laserstrahls

## Patentansprüche

1. Verfahren zum Herstellen von Trägerplatten für Reibmaterialblöcke (22), wie Bremsbeläge für Schienen- und schienenungebundene Fahrzeuge, wobei zum Herstellen eines Verbundes zwischen der Trägerplatte und dem Reibmaterialblock (22) mindestens ein Halterungsbett (16) für den Reibmaterialblock ausgebildet wird,
**dadurch gekennzeichnet,**
**dass** vermittels einer Düse (10) ein Gemisch aus Trägergas und Metallpulver (12) auf die Oberfläche der Trägerplatte (14) zur Ausbildung eines Halterungsbettes (16) mit separaten, voneinander beabstandeten Materialerhöhungen (20) als Oberflächenstruktur aufgebracht wird, wobei die Materialerhöhungen unter Ausschluss einer Wärmebehandlung der gesamten Trägerplatte (14) mittels lokal oder abschnittsweise auf die Trägerplatte (14) einwirkender Energie, insbesondere Strahlungsenergie, nacheinander oder parallel zueinander erzeugt werden, wobei als Werkstoff für die Trägerplatte (14) Metall, Metalllegierungen, Hartkunststoff, Glas oder Keramik verwendet wird.

2. Verfahren nach Anspruch 1,
**dadurch gekennzeichnet,**
**dass** die Materialerhöhungen (20) durch Aufsintern von Pulver oder mittels Pulverbeschichtung mit Laserstrahl, Flammstrahl oder Plasmastrahl oder anderen geeigneten Energiequellen oder durch Einschießen mittels Laserstrahlen in das Material der Trägerplatte (14) erzeugt werden.

3. Verfahren nach Anspruch 2,
**dadurch gekennzeichnet,**
**dass** in dem Pulver Metallhydride und/oder Karbide und/oder Nitride enthalten sind.

4. Verfahren nach einem der Ansprüche 2 und 3,
**dadurch gekennzeichnet,**
**dass** das Aufsintern des Pulvers auf die Trägerplatte (14) abschnittsweise erfolgt.

5. Verfahren nach einem der Ansprüche 2 bis 4,
**dadurch gekennzeichnet,**
**dass** die Materialerhöhungen (20) auf der Trägerplatte (14) pilzartig ausgebildet werden.

6. Verfahren nach einem der Ansprüche 2 bis 5,
**dadurch gekennzeichnet,**
**dass** die Materialerhöhungen (20) aus Stahl, Metall, das Karbide und/oder Nitride enthält, Keramik, Glas oder Hartkunststoffen hergestellt werden.

7. Verfahren nach einem der Ansprüche 1 bis 6,
**dadurch gekennzeichnet,**
**dass** der Reibmaterialblock in die Oberflächenstruktur des Halterungsbettes (16) eingepresst wird.

8. Verfahren nach einem der Ansprüche 1 bis 7,
**dadurch gekennzeichnet,**
**dass** vor dem Aufbringen des Reibmaterialblockes (22) auf das Halterungsbett (16) eine keramische Zwischenschicht aufgebracht wird.

9. Verfahren nach einem der Ansprüche 1 bis 8,
**dadurch gekennzeichnet,**
**dass** die Materialerhöhungen (20) rasterartig auf die Trägerplatte (14) aufgebracht werden.

10. Verfahren nach einem der Ansprüche 1 bis 9,
**dadurch gekennzeichnet,**
**dass** vor der Ausbildung des Halterungsbettes (16) die Trägerplatte (14) vorgewärmt wird.

## Claims

1. Method for the manufacturing of support plates for friction material blocks (22) like brake linings for rail mounted vehicles and vehicles which are not mounted on rails, whereby at least one fixing bed (16) for the friction material block is formed for producing a compound between the support plate and the friction material block (22),
**characterized in**
**that** a mixture of carrier gas and metal powder (12) is applied by means of a nozzle (10) onto the surface of the support plate (14) for forming a fixing bed (16) with separate material prominences (20) spaced from each other, whereby the material prominences are produced the one after the other or parallel to each other by excluding a thermal treatment of the whole support plate (14) by means of energy acting locally or sectionwise on the support plate (14), in particular of radiation energy, whereby metal, metal alloys, hard plastic, glass or ceramics is used as a material for the support plate (14).

2. Method according to claim 1,
**characterized in**
**that** the material prominences (20) are produced by sintering powder or by means of powder coating with laser beam, flame beam or plasma beam or other appropriate energy sources or by shooting-in by means of laser beams into the material of the support plate (14).

3. Method according to claim 2,
**characterized in**
**that** metal hydrides and/or carbides and/or nitrides are contained in the powder.

4. Method according to any of the claims 2 and 3,
**characterized in**
**that** the sintering of the powder onto the support plate (14) is carried out sectionwise.

5. Method according to any of the claims 2 to 4,
**characterized in**
**that** the material prominences (20) are configured mushroom-type on the support plate (14).

6. Method according to any of the claims 2 to 5,
**characterized in**
**that** the material prominences (20) are made of steel, metal which contains carbides and/or nitrides, glass or hard plastics.

7. Method according to any of the claims 1 to 6,
**characterized in**
**that** the friction material block is pressed into the surface structure of the fixing bed (16).

8. Method according to any of the claims 1 to 7,
**characterized in**
**that** a ceramic intermediate layer is applied before applying the friction material block (22) onto the fixing bed (16).

9. Method according to any of the claims 1 to 8,
**characterized in**
**that** the material prominences (20) are applied onto the support plate (14) in the manner of a grid.

10. Method according to any of the claims 1 to 9,
**characterized in**
**that** the support plate (14) is preheated before the formation of the fixing bed (16).

## Revendications

1. Procédé de fabrication des plaques de support pour blocs de matériau de friction (22), comme garnitures de frein pour véhicules sur rails et non montés sur rails, au moins un lit de support (16) pour le bloc de matériau de friction étant formé pour réaliser une connexion entre la plaque de support et le bloc de matériau de friction (22),
**caractérisé en ce**
**qu'**un mélange de gaz porteur et de poudre métallique (12) est appliqué comme structure de surface au moyen d'une tuyère (10) sur la surface de la plaque de support (14) pour former un lit de support (16) avec des rehaussements de matériau séparés (20), espacés les uns des autres, les rehaussements de matériau étant produits les uns après les autres ou parallèlement les uns aux autres en excluant un traitement thermique de l'ensemble de la plaque de support (14) au moyen d'énergie agissant localement ou par section sur la plaque de support (14), en particulier d'énergie de rayonnement, du métal, des alliages de métal, du plastique dur, du verre ou de la céramique étant utilisée comme matériau pour la plaque de support (14).

2. Procédé selon la revendication 1,
**caractérisé en ce**
**que** les rehaussements de matériau (20) sont produits par frittage de poudre ou au moyen d'une enduction de poudre avec un faisceau laser, un jet de flamme ou un jet de plasma ou d'autres sources d'énergie appropriées ou par injection par faisceaux laser dans le matériau de la plaque de support (14).

3. Procédé selon la revendication 2,
**caractérisé en ce**
**que** des hydrures de métal et/ou des carbures et/ou des nitrures sont contenus dans la poudre.

4. Procédé selon l'une des revendications 2 et 3,
**caractérisé en ce**
**que** le frittage de la poudre se fait par section sur la plaque de support (14).

5. Procédé selon l'une des revendications 2 à 4,
**caractérisé en ce**
**que** les rehaussements de matériau (20) sont configurés de type champignon sur la plaque de support (14).

6. Procédé selon l'une des revendications 2 à 5,
**caractérisé en ce**
**que** les rehaussements de matériau (20) sont fabriqués en acier, en métal qui contient des carbures et/ou nitrures, de la céramique, du verre ou des plastiques durs.

7. Procédé selon l'une des revendications 1 à 6,
**caractérisé en ce**
**que** le bloc de matériau de friction est pressé dans la structure de surface du lit de support (16).

8. Procédé selon l'une des revendications 1 à 7,
**caractérisé en ce**
**qu'**une couche intermédiaire céramique est appliquée avant l'application du bloc de matériau de friction (22) sur le lit de support (16).

9. Procédé selon l'une des revendications 1 à 8,
**caractérisé en ce**
**que** les rehaussements de matériau (20) sont appliqués à la manière d'une grille sur la plaque de support (14).

10. Procédé selon l'une des revendications 1 à 9,
**caractérisé en ce**
**que** la plaque de support (14) est préchauffée avant la formation du lit de support (16).
